# EUROPEAN PATENT APPLICATION

(11) **EP 2 112 613 A1**
(43) Date of publication of application: **28.10.2009**
(21) Application number: 09156290.0
(22) Date of filing: 26.03.2009
(51) Int. Cl.: G06F 21/20

(54) **Restricted use information cards**

(30) Priority: 24.04.2008 US 108805
(71) Applicant: Novell, Inc., Provo, Utah 84606-6169 (US)
(72) Inventor: Doman, Thomas E, Pleasant Grove, UT 84062 (US); Buss, Duane F., West Mountain, UT 84651 (US)
(74) Representative: Hanna, Peter William Derek

(57) **Abstract**

A system and method for utilizing restricted user information cards is provided. An identity provider (135) issues a restricted use information card (460) responsive to a relying party's (130) restricted use policy. The identity provider can issue security tokens associated with the restricted use information card that include a unique-id claim (670). A broker (510) can act as an intermediary between a user and the relying party to protect the user's personal information but still uniquely identify the user to the relying party. The relying party, the identity provider, or the broker can be responsible for enforcing the restricted use policy.

## Description

### FIELD OF THE INVENTION

This invention pertains to information cards, and more particularly to information cards that are useable with restricted use policies.

### BACKGROUND OF THE INVENTION

When a user interacts with sites on the Internet (hereafter referred to as "service providers" or "relying parties"), the service provider often expects to know something about the user that is requesting the services of the provider. The typical approach for a service provider is to require the user to log into or authenticate to the service provider's computer system. But this approach, while satisfactory for the service provider, is less than ideal for the user. First, the user must remember a username and password for each service provider who expects such information. Given that different computer systems impose different requirements, and the possibility that another user might have chosen the same username, the user might be unable to use the same username/password combination on each such computer system. (There is also the related problem that if the user uses the same username/password combination on multiple computer systems, someone who hacks one such computer system would be able to access other such computer systems.) It is estimated that an average user has over 100 accounts on the Internet. For users, this is becoming an increasingly frustrating problem to deal with. Passwords and account names are too hard to remember. Second, the user has no control over how the service provider uses the information it stores. If the service provider uses the stored information in a way the user does not want, the user has relatively little ability to prevent such abuse, and essentially no recourse after the fact.

In the past year or two, the networking industry has developed the concept of information cards to tackle these problems. Information cards are a very familiar metaphor for users and the idea is gaining rapid momentum. Information cards allow users to manage their identity information and control how it is released. This gives users greater convenience in organizing their multiple personae, their preferences, and their relationships with vendors and identity providers. Interactions with on-line vendors are greatly simplified.

There are currently two kinds of information cards: 1) personal cards - self-issued cards - and 2) managed cards - cards that are issued by an identity provider. A personal card contains self-asserted identity information - the person issues the card and is the authority for the identity information it contains. The managed card is issued by an identity provider. The identity provider provides the identity information and asserts its validity.

When a user wants to release identity information to a relying party (for example, a web site that the user is interacting with), a tool known as a card selector assists the user in selecting an appropriate information card. When a managed card is selected, the card selector communicates with the identity provider to obtain a security token that contains the needed information. This interaction between the card selector and the identity provider is usually secure. The identity provider typically requests the user to authenticate himself or herself (for example, using a username/password, X.509 certificate, etc.) before it returns a security token. The identity information can then be provided to the relying party.

As part of the information card system, the identity provider can create information cards which are then stored by the card selector. Users can manage their digital identities from various identity providers, as well as selectively examine, manipulate and employ the identities with various online services. The information card is not an actual security token but is used as a representation of a security token, with associated claims issuer, authentication requirements, policies, and metadata.

Although the information card system provides a valuable means for users to manage the release of their personal information, it does not provide a good means for relying parties to uniquely identify individual users. For example, a relying party might want to uniquely identify a user (using a credit card number or social security number, for instance) in order to provide a metered service to the user. A further example would be when the relying party wants to provide a trial service including a limited number of site accesses. When not using information cards, the relying party can simply require that each user provide some unique identifying information to activate the metered or trial service. However, an important aspect of the information card system is to prevent the relying party from obtaining this uniquely identifying information and so relying parties might not be able to provide metered or trial services using information cards in the conventional information card system.

A need remains for a way to address these and other problems associated with the prior art.

### SUMMARY OF THE INVENTION

The present invention provides methods and systems related to the use of information cards, in accordance with claims which follow. Embodiments of the invention have to do with restricted use information cards. An identity provider can issue a restricted use information card that is used to enforce the restricted use policy of a relying party. Security tokens issued by the identity provider associated with the restricted use information card can include a unique-id claim so that the relying party can enforce the terms of the restricted use policy.

In other embodiments of the invention, the identity provider can enforce the terms of the restricted use policy by limiting the quantity of security tokens it issues associated with the restricted use information card. Also, a broker can be used as an intermediary between the relying party and the user so that uniquely identifying information is provided to the broker, but not the relying party.

The foregoing and other features, objects, and advantages of the invention will become more readily apparent from the following detailed description, which proceeds with reference to the accompanying drawings.

### BRIEF DESCRIPTION OF THE DRAWINGS

FIG. 1 shows a sequence of communications between a client, a relying party, and an identity provider.
FIG. 2 shows details of a client according to embodiments of the invention.
FIG. 3 shows an information card including restricted use metadata.
FIG. 4 shows a sequence of communications between a client, a relying party, and an identity provider to obtain a restricted use information card according to embodiments of the invention.
FIG. 5 shows a sequence of communications between a client, a relying party, an identity provider, and a broker according to embodiments of the invention.
FIG. 6 shows a sequence of communications between a client, a relying party, and an identity provider according to embodiments of the invention.
FIG. 7 shows a flowchart of a procedure to obtain a restricted use information card according to an embodiment of the invention.
FIG. 8 shows a flowchart of a procedure to issue a restricted use information card according to an embodiment of the invention.
FIG. 9 shows a flowchart of a procedure to use a restricted use information card according to an embodiment of the invention.
FIG. 10 shows a flowchart of a procedure to issue a security token associated with a restricted use information card according to an embodiment of the invention.
FIG. 11 shows a flowchart of a procedure to obtain restricted use access to a relying party according to an embodiment of the invention.

### DETAILED DESCRIPTION OF THE PREFERRED EMBODIMENT

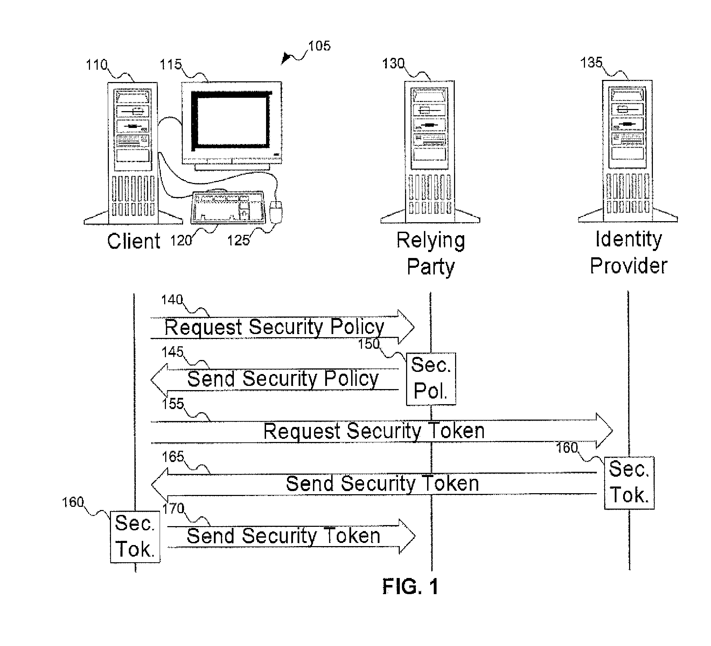

Embodiments of the invention provide restricted use information cards. Consequently, before explaining the invention, it is important to understand the operation of an information card system. Such a system is explained below with respect to FIG. 1.

FIG. 1 shows a sequence of communications between a client, a relying party, and an identity provider. For simplicity, each party (the client, the relying party, and the identity provider) can be referred to by their machines. Actions attributed to each party are taken by that party's machine, except where the context indicates the actions are taken by the actual party.

In FIG. 1, computer system 105, the client, is shown as including computer 110, monitor 115, keyboard 120, and mouse 125. A person skilled in the art will recognize that other components can be included with computer system 105: for example, other input/output devices, such as a printer. In addition, FIG. 1 does not show some of the conventional internal components of client 105; for example, a central processing unit, memory, storage, etc. Although not shown in FIG. 1, a person skilled in the art will recognize that client 105 can interact with other computer systems, such as relying party 130 and identity provider 135, either directly or over a network (not shown) of any type. Finally, although FIG. 1 shows client 105 as a conventional desktop computer, a person skilled in the art will recognize that client 105 can be any type of machine or computing device capable of providing the services attributed herein to client 105, including, for example, a laptop computer, a personal digital assistant (PDA), or a cellular telephone.

Relying party 130 is a machine managed by a party that relies in some way on the identity of the user of client 105. The operator of relying party 130 can be any type of relying party. For example, the operator of relying party 130 can be a merchant running a business on a website. Alternatively, the operator of relying party 130 can be an entity that offers assistance on some matter to registered parties. Relying party 130 is so named because it relies on establishing some identifying information about the user.

Identity provider 135, on the other hand, is managed by a party responsible for providing identity information (or other such information) about the user for consumption by the relying party 130. Depending on the type of information identity provider 135 stores for a user, a single user might store identifying information with a number of different identity providers 135, any of which might be able to satisfy the request of the relying party 130. For example, identity provider 135 might be a governmental agency, responsible for storing information generated by the government, such as a driver's license number or a social security number. Alternatively, identity provider 135 might be a third party that is in the business of managing identity information on behalf of users.

The conventional methodology of releasing identity information can be found in a number of sources. One such source is Microsoft Corporation, which has published a document entitled Introducing Windows CardSpace, which can be found on the World Wide Web at http://msdn2.microsoft.com/en-us/library/aa480189.aspx and is hereby incorporated by reference. To summarize the operation of Windows CardSpace, when a user wants to access some data from relying party 130, client 105 requests the security policy of relying party 130, as shown in communication 140, which is returned in communication 145 as security policy 150. Security policy 150 is a summary of the information relying party 130 needs, how the information should be formatted, and so on.

Once client 105 has security policy 150, client 105 can identify which information cards can satisfy security policy 150. Different security policies might result in different information cards being usable. For example, if relying party 130 simply needs an e-mail address, the information cards that can satisfy this security policy might be different from the information cards that satisfy a security policy requesting the user's full name, mailing address, and social security number. The user can then select an information card that satisfies security policy 150.

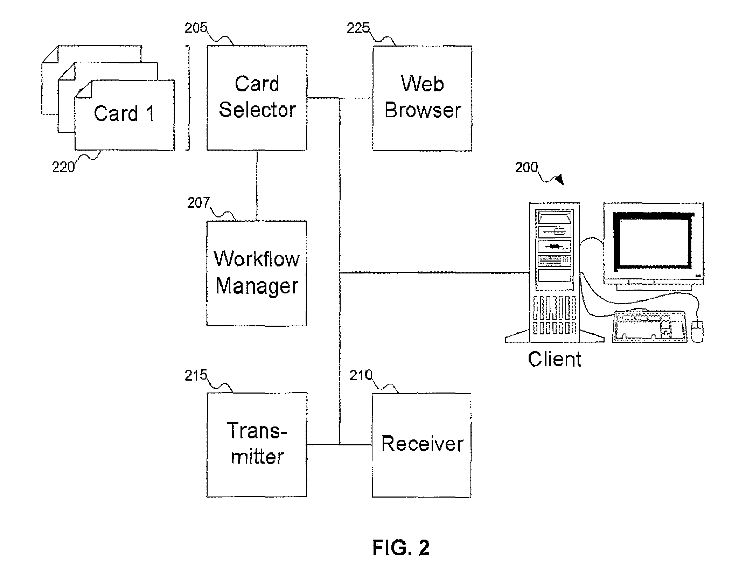

A card selector (described below with respect to FIG. 2) on client 105 can be used by the user to select the information card. The card selector can present the user with a list or graphical display of all available information cards and information cards that satisfy the security policy can be highlighted in some way to distinguish them from the remaining cards. Alternatively, the card selector can display only the information cards that can satisfy the security policy. The card selector can provide a means for the user to select the desired information card by, for instance, a mouse click or a touch on a touch screen.

Once the user has selected an acceptable information card, client 105 uses the selected information card to transmit a request for a security token from identity provider 135, as shown in communication 155. This request can identify the data to be included in the security token, the credential that identifies the user, and other data the identity provider needs to generate the security token. Identity provider 135 returns security token 160, as shown in communication 165. Security token 160 includes a number of claims, or pieces of information, that include the data the user wants to release to the relying party. Security token 160 is usually encrypted in some manner, and perhaps signed and/or time-stamped by identity provider 135, so that relying party 130 can verify that the security token originated with identity provider 135 (as opposed to being spoofed by someone intent on defrauding relying party 130). Client 105 then forwards security token 160 to relying party 130, as shown in communication 170.

In addition, the selected information card can be a self-issued information card (also called a personal card): that is, an information card issued not by an identity provider, but by client 105 itself. In that case, identity provider 135 effectively becomes part of client 105.

Often, the identity provider 135 takes the form of a web server, but this does not have to be the case. As an example, the identity provider 135 could be a Security Token Service (STS) that resides on the client 105, resides on the network, or even resides on removable storage media such as a flash drive.

The conventional information card system is based on the idea that relying parties do not need to know a user's personal information in order to grant the user access to data at the relying party. For example, the conventional information card system uses a PPID (private personal identifier), which is relying party specific, but it is not necessarily user specific. The same user can present multiple PPIDs to a relying party based on where the associated security token came from (it could come from the card selector or any of multiple identity providers or secure token servers (STSs)), which persona the user used to obtain the security token, and/or which account the user used to obtain the security token. However, situations can arise where a relying party uses uniquely identifying user information in order to enforce some type of restricted use policy. The conventional information card system does not provide a ready means to accomplish this.

For example, a relying party might want to grant free trial subscriptions to a service that it provides, in the hopes that once users try the service they will elect to pay to continue using the service. In order to enforce its restricted use subscription, the relying party might require some unique identifying information about each user. Otherwise, users wishing to continue using the free service beyond the trial subscription might simply initiate a new trial subscription. But even if the relying party requires some unique identifying information for each user, users can still find a way to extend their free use of the service. As an example, if the relying party requires each user to enter an e-mail address, a user can simply obtain a new e-mail address to open a new trial subscription each time the user's old subscription expires. To prevent this from occurring, a relying party can require more specific identifying information, such as a driver's license number, but user's are unlikely to want to give this information to the relying party and might choose not to use the relying party's service rather than provide this information.

The conventional information card system does not provide a solution to this problem, and might actually exacerbate the problem. For example, a user can establish several personas with a single identity provider and then obtain managed cards for each persona. Then, the user can use the managed cards for the different personas to establish multiple free subscriptions with a relying party. The relying party will not know that each of the different subscriptions belong to the same user because the security token provided to the relying party does not necessarily include personal identity information about the user.

According to embodiments of the invention, information cards can be used to resolve this problem. According to some embodiments of the invention, an identity provider can issue a unidirectional identifier claim in a security token, which would provide assurances to the relying party that the user is not using multiple personas from that identity provider. According to other embodiments, a broker can act as an intermediary between the user and the relying party so that the relying party can be assured that the user is not using multiple accounts but the user does not have to provide personal identifying information to the relying party. The broker can be a separate identity provider that is trusted by both the user and the relying party.

Embodiments of the invention can utilize cardflows and visual and/or non-visual cues to provide users with an indicator of the status of the restricted use information cards as well as providing an easy method to update or renew the restricted use information cards. Cardflows are described in U.S. Patent Application No. 12/044,816, titled SYSTEM AND METHOD FOR USING WORKFLOWS WITH INFORMATION CARDS, filed 7 March 2008. Visual and non-visual cues are described in U.S. Patent Application Serial No. 12/029,373, titled VISUAL AND NON-VISUAL CUES FOR CONVEYING STATE OF INFORMATION CARDS, ELECTRONIC WALLETS, AND KEYRINGS, filed February 11, 2008.

FIG. 2 shows details of a client according to embodiments of the invention. Referring to FIG. 2, client 200 includes card selector 205, receiver 210, transmitter 215, and browser 225. Card selector 205 enables a user to select an information card 220 that satisfies a security policy, as described above with respect to FIG. 1. Card selector 205 also enables a user to obtain managed cards from identity providers and to install the managed cards on client 200. Receiver 210 receives data transmitted to client 200, and transmitter 215 transmits information from client 200. The receiver 210 and the transmitter 215 facilitate communications between client 200 and, for example, relying party 130 and identity provider 135. The browser 225 allows the user to interact with web pages on a network: for example, web pages created by the identity provider 135 or the relying party 130.

Card selector 205 can include workflow manager 207. Workflow manager 207 allows the user to execute various workflows on the information cards stored in the card selector 205. Also, workflow manager 207 allows various workflows to be associated with specific information cards stored in the card selector 205. Workflows involving information cards can be referred to as cardflows. By using cardflows, the user can perform various functions without having to manually execute each step in the workflow. Further, when cardflows are associated with a particular information card, by an identity provider for example, the user can be prompted by the card selector to execute the cardflow. The card selector 205 can prompt the user with, for example, visual and/or non-visual cues. Specifically, a cardflow cue (such as a shredder icon) can be included in the display of an information card, indicating to the user that a shred cardflow can be initiated with respect to the information card.

As an example of a restricted use information card, a user can interact with a relying party which offers a trial service period. In order to activate this trial period, the user requests a restricted use information card from an identity provider which supports restricted use information cards. The identity provider can be chosen by the relying party or mutually agreed upon by the relying party and the user. The user is not required to have a card selector which supports restricted use information cards. However, if the user's card selector supports visual and/or non-visual cues and cardflows, the enforcement of the trial period, which is between the relying party and the identity provider, can be made a much more clear and intuitive experience for the user. For example, the card selector can use visual cues to show the user the status of the restriction associated with the restricted use information card. The card selector can use a cardflow to obtain updated status information on the restriction and to obtain updated visual cues to inform the user of such status.

In response to the user's request, the identity provider issues a restricted use information card which specifies the restrictions which embody the relying party's desired terms of the trial period. For example, the restricted use information card can include metadata describing the terms of the restriction and the relying party with which it is associated. As the user uses this card to access the relying party, either the relying party or the identity provider can then track the card's usage until the terms of the trial period are met or expire.

The restriction associated with a particular restricted use information card can apply to several relying parties. For example, a restricted use information card might provide a trial period for access to several related relying parties. These relying parties can be partner sites or sites owned by the same company, and the restrictions can apply to all sites cumulatively or to each site separately. Restrictions on the card can include, but are not limited to: trial service, metered service, level of service, type of service, relying party used for a particular service, and/or renewal/reauthorization restrictions.

Also, the restriction associated with a particular restricted use information card can apply to many unrelated relying parties. For example, the restriction can be an industry- defined standard restriction that can apply to any relying party willing to allow the standard restriction. Alternatively, the restriction can be defined by the identity provider. The identity provider might be known amongst relying parties as an issuer of restricted use information cards that embody specific terms and the relying parties might accept security tokens associated with restricted use information cards issued by the identity provider that embody the specific terms.

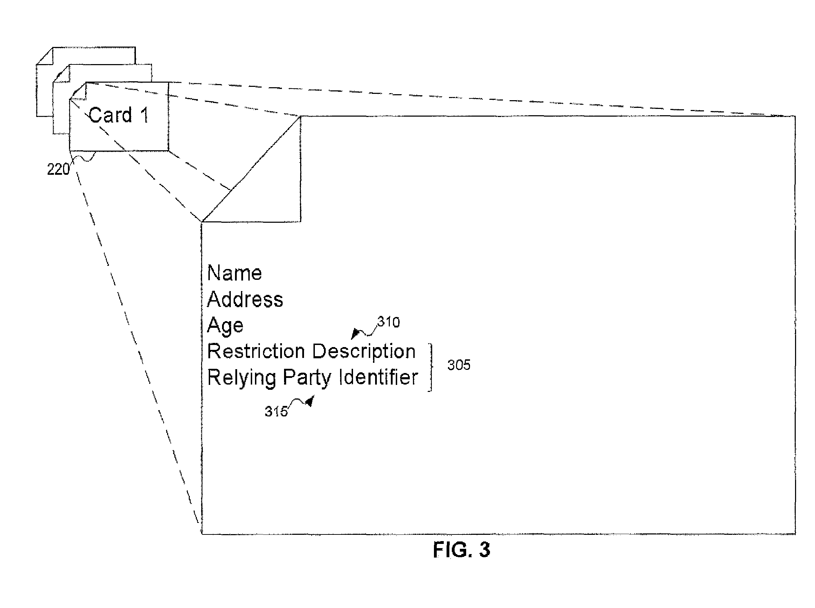

FIG. 3 shows an information card including restricted use metadata. In FIG. 3, an example of information card 220 is shown in greater detail. Information card 220 is shown as including the user's name, address, age, and restricted use metadata 305. The restricted use metadata 305 can include a description of the restriction 310 and/or an identifier 315 for the relying party associated with the restriction. The identifier 315 can include a list of relying parties that are associated with the restricted use information card.

It should be noted that the information represented by information card 220 is not actually stored on the user's computer when information card 220 is a managed information card. This information is instead stored by the identity provider 135. Thus, the information displayed on information card 220 would not be the actual information stored by the client 200, but rather an indicator of what information can be included in a security token generated using information card 220.

If the user's card selector supports cardflows and visual and/or non-visual cues, information about the state of the restriction can be conveyed and "one-click" steps enabled to initiate cardflows to do such things as extend the trial period, initiate an official membership, or even post-membership items such as updating a credit card expiration date. Also, once the trial period is expired, visual and/or non-visual cues can be provided to the user in the card selector, indicating the expired nature of the card and prompting the user to initiate, for example, a "shred" cardflow.

The card selector does not have to be altered to support restricted use information cards. However, if the card selector supports cardflows and visual and/or non-visual cues, then the card selector can communicate with the identity provider and/or relying party to associate various visual and/or non-visual cues and cardflows with the restricted use information cards. For example, after a trial membership account has been granted at the relying party, the relying party might publish endpoints which the user can associate with the restricted use information card. The endpoints can be queried for cardflows, visual and/or non-visual cues, and other information to be associated with the card.

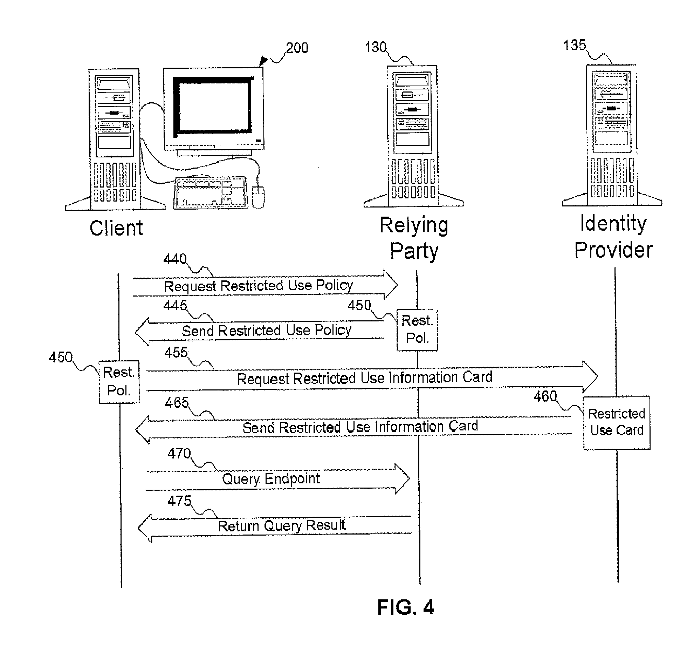

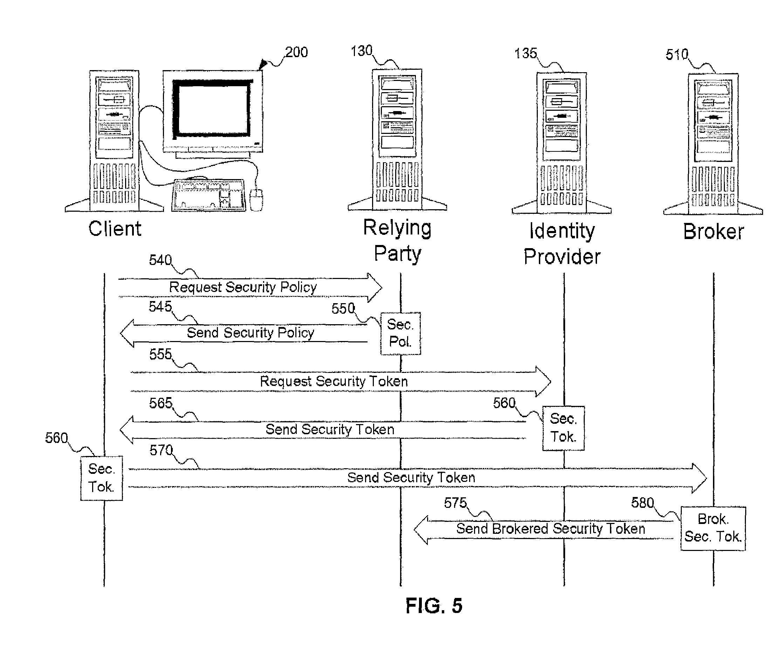

FIG. 4 shows a sequence of communications between a client 200, a relying party 130, and an identity provider 135 to obtain a restricted use information card according to embodiments of the invention. Referring to FIG. 4, when a user wants to gain restricted use access to some data from relying party 130, client 200 requests the restricted use policy of relying party 130, as shown in communication 440, which is returned in communication 445 as restricted use policy 450. Restricted use policy 450 includes a summary of the restrictions on the user's account. Restricted use policy 450 can also include identifiers for one or more identity providers. In this case, the relying party might only accept security tokens associated with restricted use information cards issued by the identified identity providers: for example, it might be that the identified identity providers are the only ones the relying party 130 trusts to properly enforce restricted use policy 450, or that the identified identity providers are known to handle restricted use information cards. Restricted use policy 450 can also include identifiers for one or more brokers from which the relying party is willing to accept brokered security tokens. Brokered security tokens are described below with reference to FIG. 5.

According to some embodiments of the invention, the restricted use policy can be part of the relying party's security policy. In this case, the card selector can request the security policy of the relying party rather than a restricted use policy.

Once client 200 has restricted use policy 450, the card selector can generate a request for a restricted use information card that includes the restricted use policy. Client 200 then transmits the request for the restricted use information card to identity provider 135, as shown in communication 455. The identity provider 135 can be the identity provider/broker identified in restricted use policy 450 or it can be a different identity provider/broker. Identity provider 135 generates the restricted use information card 460. The restricted use information card can include cached (i.e., non-authoritative) metadata describing the restriction and/or identifying the relying party or relying parties associated with the restriction. The metadata can also include an identifier for a broker to be used to issue brokered security tokens associated with the restricted use information card. Identity provider 135 then sends the restricted use information card 460 to the client 200, as shown in communication 465. Client 200 installs the restricted use information card 460 and the card is now available for use by the client 200 to gain restricted use access to the data on relying party 130.

Once the client 200 has installed the restricted use information card, the client 200 can optionally query an endpoint at relying party 130, as shown in communication 470. The endpoint returns the requested information as shown in communication 475. The requested information can include, among other things, cardflows, visual and/or non-visual cues, and restriction status. The client 200 can then associate the cardflows and visual and/or non-visual cues with the restricted use information card 460. The cardflows and visual and/or non-visual cues can be used by the client 200 to indicate various information about the restricted use information card to the user and enable the user to initiate cardflows related to the restricted use information card.

A person of ordinary skill in the art will appreciate that the client 200 does not have to obtain the restricted use policy 450 from the relying party 130 in order to obtain the restricted use information card 460. For example, the identity provider 135 might already have the restricted use policy 450 such that the client 200 merely has to send the request for the restricted use information card 460 without including the restricted use policy 450. This can occur when, for example, the relying party 130 has provided one or more restricted use policies to the identity provider 135 in advance. The relying party 130 can provide a link on its website to the identity provider 135 so that the client 200 can proceed directly to the identity provider 135 to obtain the restricted use information card 460 without providing the restricted use policy 450. Also, the identity provider 135 might store many different restricted use policies for many different relying parties. When a user establishes an account at the identity provider 135, the user can be presented with the option to obtain one or more restricted use information cards enabling restricted use access to several different relying parties. The user could also be presented with the option to obtain one or more restricted use information cards at other times. In these cases, the client 200 does not need to request the restricted use policy 450 from the relying party 130 and provide it to the identity provider 135 in order to obtain the restricted use information card 460 because the identity provider 135 will already have the restricted use policy 450, possibly among many other restricted use policies.

It is also possible for the identity provider 135 to have multiple restricted use policies that are not specific to any given relying party. For example, the identity provider can have some restricted use policies that provide a standard type of restricted use, such as a restriction on the number of visits or a time restriction, that will be honored by many different relying parties. These restricted use policies can be defined by an industry standard such that both relying parties and identity providers can be assured of the terms of the restricted use. Alternatively, the restricted use policies can be defined by the identity provider. In this case, the identity provider might specialize in the issuance of restricted use information cards such that relying parties can trust that any restricted use information cards issued by the identity provider will be tied to specific restricted use terms that are acceptable to the relying party. In this case, the identity provider can also act as a broker, as described above.

A person of ordinary skill in the art will recognize that after receiving the request for the restricted use information card, the identity provider 135 can request that the user provide authentication materials to the identity provider 135. The user can provide self-asserted authentication materials if the identity provider 135 is willing to accept them. Alternatively, the user can provide one or more security tokens from one or more additional identity providers as authentication materials. In this case, the card selector will need to obtain the security tokens from the additional identity providers and provide the security tokens to the identity provider 135 before the restricted use information card is issued. Obtaining the security tokens from the additional identity providers and/or providing the security tokens to the identity provider 135 can be managed by a cardflow.

According to some embodiments of the invention, the identity provider is trusted to provide some enforcement mechanisms which help prevent users from taking undue advantage of the relying party's limited use offers. For example, for a trial membership offer, the user does not want to provide personal information (such as a credit card number) to the relying party, but the relying party wants something to uniquely identify the user and prevent the user from living on trial membership offers indefinitely. Consequently, an identity provider can act as a broker between the relying party and the user. The broker can provide assurances to the relying party that the user is appropriately uniquely identified without releasing the sensitive unique identifying information to the relying party. This could be accomplished by having the broker act as an intermediate relying party which obtains the sensitive identity information, in the form of claims in a security token, from the identity provider that issued the restricted use information card. The broker can then validate the identifying information and generate alternative but unique claims in a brokered security token that can be used by the relying party to uniquely identify the user, but that do not include the user's identifying information. The alternate claims can be stored by the relying party and/or the broker. In this way, both the relying party wishing to enforce restricted use terms and the user willing to enter into a restricted use agreement are protected as long as the broker is trusted by both parties. (It is true, however that the user has to trust the broker with the user's identifying information, when using a broker.)

FIG. 5 shows a sequence of communications between a client, a relying party, an identity provider, and a broker according to embodiments of the invention. Referring to FIG. 5, when a user wants to access some data from relying party 130 under a restricted use agreement, client 200 requests the security policy of relying party 130, as shown in communication 540, which is returned in communication 545 as security policy 550. Security policy 550 can include an identifier for broker 510. Security policy 550 can also include metadata specifying the restricted use policies supported by the relying party. Once client 200 has security policy 550, the card selector can identify which information cards can satisfy security policy 550 and present them to the user. The card selector can use the metadata in the security policy to identify one or more restricted use information cards to present to the user. The user can then select a restricted use information card. Client 200 transmits a request for a security token to identity provider 135, as shown in communication 555. Identity provider 135 returns security token 560, as shown in communication 565. Security token 560 includes uniquely identifying information about the user. The user does not want to provide this information to the relying party, but is willing to provide the information to a trusted broker. Consequently, client 200 forwards security token 560 to broker 510, as shown in communication 570. The broker 510 then validates the uniquely identifying information in the security token 560 and generates a brokered security token 580. The broker 510 then sends the brokered security token 580 to the relying party 130, as shown in communication 575. The relying party 130 validates the brokered security token 580 and allows the user access to the data on relying party 130.

Although as described above, the broker 510 sends the brokered security token 580 directly to the relying party 130, a person of ordinary skill in the art will appreciate that the broker 510 could send the brokered security token 580 to the client 200 instead. The client 200 could then forward the brokered security token 580 to the relying party 130. In this embodiment, client 200 would have control over all data: data shared between any of relying party 130, identity provider 135, and broker 510 flows through client 200.

Also, in the above example, the user selects a restricted use information card and transmits a request for a security token to a single identity provider. However, the broker might require authentication materials from several identity providers before it will issue a brokered security token. This could happen, for example, when security tokens from multiple identity providers are used as credentials to obtain a restricted use information card from the broker. In this case, the user can select a restricted use information card, which can trigger a cardflow that will transmit requests for security tokens to multiple identity providers based on the multiple information cards that were used to obtain the restricted use information card. In this way, the card selector can obtain authorization information from multiple identity providers to provide to the broker. Cardflows can be used to: assist the card selector in identifying multiple information cards to present to the user in order to obtain the security tokens needed to obtain the brokered security token; request security tokens from multiple identity providers; and/or forward multiple security tokens to the broker.

According to some embodiments of the invention, the security policy 550 can include an identifier for broker 510 and the broker 510 can have a brokered security policy. In this case, the card selector can, after receiving security policy 550, request the brokered security policy from the broker 510. The card selector can then identify one or more restricted use information cards that can satisfy the brokered security policy and present these cards to the user. Once the user selects one of the restricted use information cards, the card selector, through a cardflow for example, can request security tokens from one or more identity providers and then forward the security tokens to the broker 510. The broker 510 can then provide a brokered security token to either the card selector or the relying party, as described above.

In the above example, the restricted use policy can be enforced by either the broker or the relying party. When the broker is responsible for enforcing the policy, the broker can use information in the security token 560, along with information stored at the broker, to ensure that the user does not violate the terms of the restricted use policy. For example, the broker can store historical data for each brokered security token it has provided to a particular relying party from a particular user. Then, when the broker receives the security token 560, the broker can compare the stored historical data with restricted use metadata in the security token to ensure the terms of the restricted use policy are not violated. In this case, the restricted use metadata comes from either the client or the identity provider. Therefore, the broker is relying on a trust relationship with the client and/or the identity provider. Alternatively, the broker can store the historical data and obtain the terms of the restricted use policy independently, such that when the broker receives the security token 560, the broker can simply compare the stored data to the independently obtained restricted use policy to ensure that the terms of the restricted use policy are not violated before issuing the brokered security token 580. In this case, the restricted use policy can come from the relying party, so the broker does not have to rely on restricted use metadata in the security token. For example, when the broker receives the security token 560, the broker can query an endpoint at the relying party to obtain the restricted use policy. The broker can either store the restricted use policy locally or the broker can query the relying party each time the broker is requested to issue a brokered security token.

In the case in which the broker is responsible for enforcing the restricted use policy, the brokered security token can include a claim identifying or describing the restricted use policy that was used by the broker to decide whether or not to issue the brokered security token. Such a claim can be referred to as a restriction-id claim. The relying party can use the restriction-id claim in the brokered security token to know what restricted use policy is being applied for the particular user.

According to some embodiments of the invention, the card selector can request an identifier of the restricted use policy enforced by the broker. The broker can return an identifier for the policy or information about the policy to the card selector in a display token. The card selector can then use the display token to update metadata, visual cues, and/or cardflows associated with the restricted use information card. For example, if the restriction is based on the number of brokered security tokens issued, the card selector can use the display token to determine that another brokered security token has been issued under the particular restricted use policy and update a visual cue associated with the restricted use information card based on this information.

When the relying party is responsible for enforcing the restricted use policy, the relying party can require that the broker provide a unique identifier in the brokered security token 580 that the relying party can use to verify that the terms of the restricted use policy are not violated. In other words, the relying party can require that for each security token the broker receives from a particular user, the broker supplies the same unique identifier to the relying party in the brokered security token 580. Then, the relying party can use the unique identifier to keep track of the particular user's status (i.e., number of visits, or the span since the user's first visit). It should be noted that the unique identifier does not necessarily include any personal information about the user; it is merely an assurance from the broker to the relying party that a particular user is being uniquely identified by the broker.

A person of ordinary skill in the art will recognize that when enforcement of the restricted use policy is handled by either the broker or the relying party, the information card used to obtain the security token 560 does not necessarily need to be a restricted use information card. In other words, the identity provider does not need to know that this is a restricted use interaction. The user can select a non-restricted use information card to obtain the security token from the identity provider, and the restricted use policy can still be enforced by the broker or the relying party, as long as the security token includes uniquely identifying information about the user, which the identity provider is trusted to assert.

According to other embodiments, the identity provider that issues a restricted use information card can provide an identity-specific claim, referred to as a unique-id claim, which is generated by the identity provider based on the relying party to which the claim is being released. The unique-id claim can be generated by a broker or an identity provider, but it is based on the relying party, is specific to the user independent of any personas or accounts held by the user, and is not modifiable or removable by the card selector. Thus, the relying party can trust that the unique-id claim is uniquely identifying a user. The unique-id claim could be similar to the current PPID, which can come from either the card selector or the identity provider, but it can have some differences. The relying party cannot use the PPID to enforce account restrictions, because the same identity from different card selectors, card stores, or personas supported by the same identity provider might all provide the relying party with different PPIDs. Therefore, unlike the PPID, the unique-id claim can assure the relying party that the user is not deleting card stores or creating personas just to get a new "unique" claim in an attempt to get the relying party to issue a new trial membership. In this case, the relying party trusts that the identity provider properly polices the user's identity information and refuses to issue multiple unique-id claims for a given user. To facilitate this trust relationship, the relying party might only accept security tokens including unique-id claims from specific identity providers.

A person of ordinary skill in the art will appreciate that the unique-id claim presented in the security token can be in addition to the conventional claims presented in the security token. In other words, the security token can still include claims for information such as an e-mail address, for example, along with the unique-id claim. Further, the other claims do not have to be the same for each security token that includes a specific unique-id claim. For example, a user can have multiple personas that the user is using to gain restricted use access to one or more relying parties. The user provides different security tokens for each of the different personas, but the same unique-id claim can be included in each of the security tokens. The user can have multiple personas, but the relying party can still keep track of usage information/restricted use status associated with the user. In this way, a user can be granted restricted use access to multiple relying parties (for example, multiple websites that are commonly owned) using multiple personas, but a single restricted use policy can be enforced against the user.

Even when the broker is responsible for enforcing the restricted use policy, the broker can include the unique-id claim in the brokered security token. In this case, the relying party can use the unique-id claim to also monitor the status of the restriction, even though the broker is actually enforcing the restriction.

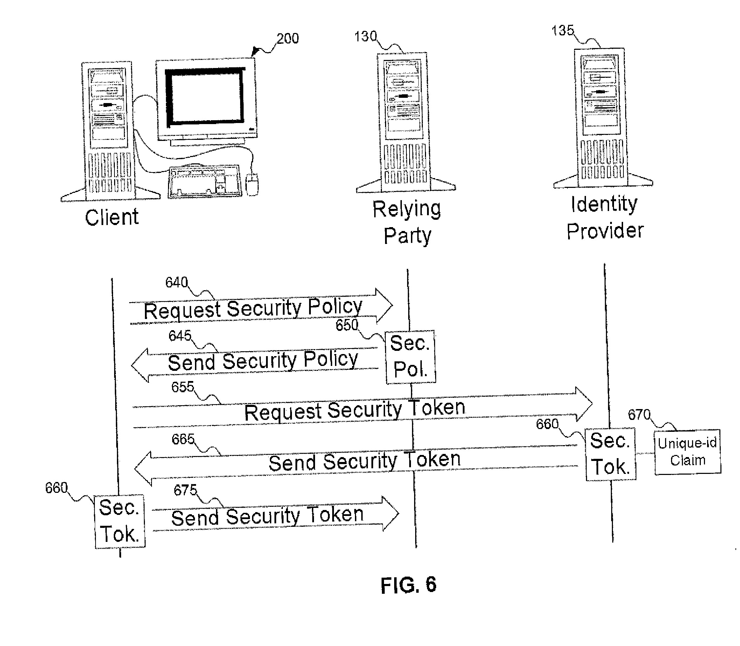

FIG. 6 shows a sequence of communications between a client, a relying party, and an identity provider according to embodiments of the invention. Referring to FIG. 6, when a user wants to access some data from relying party 130 under a restricted use policy, client 200 requests the security policy of relying party 130, as shown in communication 640, which is returned in communication 645 as security policy 650. Security policy 650 can include metadata specifying the restricted use policies that are supported by the relying party. Once client 200 has security policy 650, the card selector can identify which information cards can satisfy security policy 650 and present them to the user. The card selector can use the metadata in the security policy 650 to identify one or more restricted use information cards and present them to the user. The user can then select one of the restricted use information cards. Client 200 transmits a request for a security token to identity provider 135, as shown in communication 655. Because the client 200 has requested a security token associated with a restricted use information card, the identity provider 135 generates a unique-id claim 670. The unique-id claim 670 is a relying party-specific, unidirectional unique identifier. In other words, the unique-id claim 670 is specific to a particular relying party or relying parties and uniquely identifies the user. Identity provider 135 then returns security token 660, including the unique-id claim 670, as shown in communication 665. Client 200 forwards security token 660 to the relying party 130, as shown in communication 675. The relying party 130 then validates the security token 660 and allows the user access to the data on relying party 130.

Although in this example the identity provider is described as generating the unique-id claim when a request for a security token is received, a person of ordinary skill in the art will appreciate that the identity provider could generate the unique-id claim once, store the unique-id claim, and use the stored claim for all subsequent requests for security tokens for this relying party (and other parties related to this relying party). For example, the identity provider could generate and store the unique-id claim at the time it issues the restricted use information card.

In this example, the restricted use policy can be enforced by the relying party, the identity provider, or both. When the identity provider is responsible for enforcing the policy, the identity provider can store the restricted use policy when it originally issues the restricted use information card. Then, each time the identity provider receives a request for a security token associated with the restricted use information card, the identity provider can compare the restricted use policy with historical data (i.e., the number of security tokens issued for the particular restricted use information card) and determine that issuing a new security token complies with the restricted use policy. If issuing a new security token would violate the policy, the identity provider can refuse to issue a new security token and notify the client of the problem.

It should be noted that enforcing the restricted use policy at the identity provider can limit the types of restricted use policies that can be used. For example, the identity provider can easily enforce a restricted use policy based on the number of security tokens it issues (corresponding to a number of visits to a relying party), but it would be more difficult for an identity provider to enforce a policy based on usage time or upload/download limits. Therefore, the identity provider might not enforce the restricted use policy, but it can be useful to have the identity provider monitor the policy. For example, if the identity provider monitors the status of the policy, when the identity provider determines that the policy would be violated if it issues another security token, the identity provider can notify the client before generating the security token. The client could then initiate a cardflow to upgrade or renew the restricted use policy.

When the relying party is responsible for enforcing the restricted use policy, the relying party can use the unique-id claim provided by the identity provider, through the client, to verify that the terms of the restricted use policy are not violated. In other words, the relying party can use the unique-id claim to keep track of the particular user's status (i.e., number of visits, upload/download status, usage time, etc). It should be noted that the unique-id claim does not necessarily include any personal information about the user; it is merely an assurance from the identity provider to the relying party that a particular user is being uniquely identified by the identity provider. Consequently, the relying party would expect the identity provider to provide some enforcement mechanisms preventing the user from presenting multiple personas to the relying party. The relying party can require these mechanisms because it does not want individuals to create new personas just to skirt use restrictions such as trial periods. The relying party can specify its requirements in its security policy and enforce them by some combination of limiting the identity providers from which it is willing to accept security tokens for restricted use information cards and/or requiring all identity providers to provide unique-id claims, as described above.

According to some embodiments, the card selector can monitor the status of the restricted use information card. For example, the card selector can store the restricted use policy from the relying party before requesting the restricted use information card from the identity provider. Then, when the card selector installs the restricted use information card, it can associate the restricted use policy with the restricted use information card. The card selector can store historical data associated with the restricted use information card, such as: the number of security tokens received for the restricted use information card; the usage time associated with the card; and the upload/download status associated with the card. The card selector can present this information to the user in the form of various visual and/or non-visual cues. In response to the monitored status of a restricted use information card, the card selector can also initiate, with or without user interaction, various cardflows related to the restricted use information card. For example, when a restricted use information card is near expiration, the card selector can initiate a cardflow to query an endpoint at a relying party in order to determine renewal options. As a further example, when a restricted use information card is at or near expiration, the card selector can prompt the user to initiate a cardflow to renew or "shred" the restricted use information card. Other types of cardflows and visual and/or non-visual cues are described below.

There are many types of restricted use policies that can be supported by information cards. For example, a restricted use information card could expire after a specified interval. An example would be a 30-day trial membership. Also, a restricted use information card could be limited to allowing only a preset number of security tokens. An example would be a trial membership consisting of 10 free accesses to the relying party. A further approach would be to allow unlimited issuance of security tokens associated with the restricted use information card until some event or limit is reached. For example, the event or limit could be based on an upload/download limit, an amount of content submitted, or an account balance. Restricted use information cards could also be set to expire after a pre-set period of inactivity.

Several types of cardflows can be associated with restricted use information cards. For example, cardflows can be used to remove or disable restricted use information cards that have met the limited use restriction. The cardflows to remove or disable the cards could be automatic, with no user interaction or notification; they could provide the user with a notification and give the user a "last chance" renewal option; they could provide the user with an option to upgrade to a full membership; and/or they could provide the user with an option to renew or refill the card. According to some embodiments, cardflows can be provided for automatic renewal of accounts associated with restricted use information cards. For example, a cardflow could notify the user of renewal requirements for an account associated with a restricted use information card. A cardflow could also guide the user through the process of renewing the account, including updating information such as an updated credit card number. Cardflows can also be provided for upgrading accounts and renewing or refilling limited use accounts. With respect to visual cues, cardflows can be used to update the status of the restriction associated with a restricted use information card, obtain updated visual cues related to the status, and/or update the visual cue associated with the restricted use information card. Cardflows can also be used to remove restricted use metadata at the card selector that is no longer needed due to, for example, the expiration of the restricted use information card associated with the restriction.

Several types of visual and/or non-visual cues can also be associated with restricted use information cards. For example, an incrementing or decrementing cue could be used to indicate the status of a restricted use information card. Visual and/or non-visual cues can also be used to indicate the type of service or service level associated with a restricted use information card. For example, visual and/or non-visual cues could indicate levels such as trial member, probationary, metered service, full service, and/or unrestricted service.

The relying party can provide endpoints which the card selector can query to discover cardflow associations, restricted use policy options, account balances, and associated visual and/or non-visual cues.

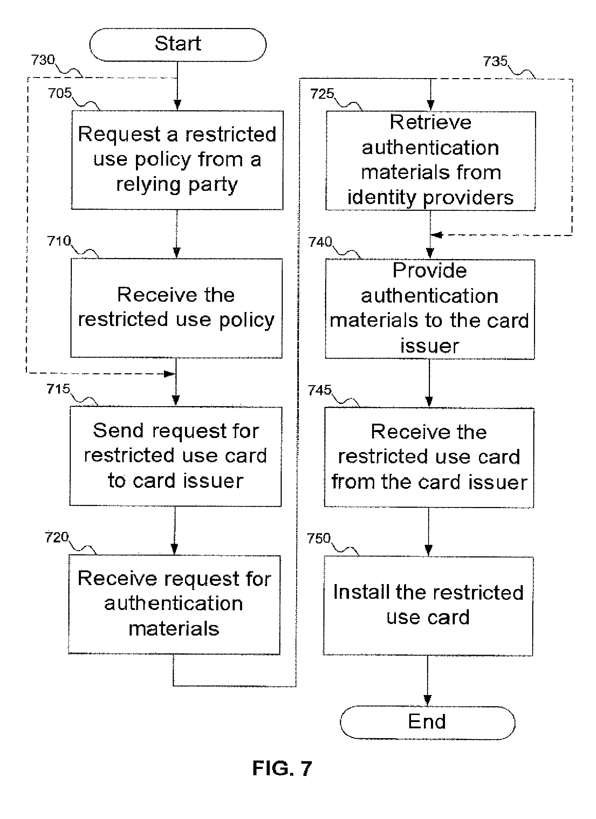

FIG. 7 shows a flowchart of a procedure to obtain a restricted use information card according to an embodiment of the invention. Referring to FIG. 7, at block 705, a card selector requests a restricted use policy from a relying party. The restricted use policy can be any type of use restriction, including a restriction on the number of visits to the relying party, an upload/download limit, a time-based restriction, and a trial access restriction. Also, the restricted use policy can be included in the relying party's security policy, in which case the card selector requests the security policy of the relying party rather than the restricted use policy. At block 710, the card selector receives the restricted use policy. The restricted use policy can include identifiers for one or more identity providers and one or more brokers. According to some embodiments, an identity provider or broker might already have one or more restricted use policies, in which case the card selector does not need to request the restricted use policy from the relying party. This possibility is shown by optional path 730 in FIG. 7.

Next, the card selector sends a request for a restricted use information card to an identity provider or broker at block 715. For purposes of this example, the identity provider or broker to which the request is sent will be referred to as a card issuer. The request for the restricted use information card can include the restricted use policy provided by the relying party if the card selector obtained such policy. The card selector can also store the restricted use policy. At block 720, the card selector receives a request from the card issuer to provide authentication materials. In the case that a user intends to use security tokens from one or more identity providers as credentials to obtain the restricted use information card, the card selector obtains the security tokens from the identity providers at block 725. In the case that the user intends to use self-asserted authentication materials, the card selector does not need to obtain security tokens from the identity providers, as shown by optional path 735. At block 740, the card selector provides the authentication materials to the card issuer. At block 745, the card selector receives the restricted use information card from the card issuer. The card selector installs the restricted use information card at block 750.

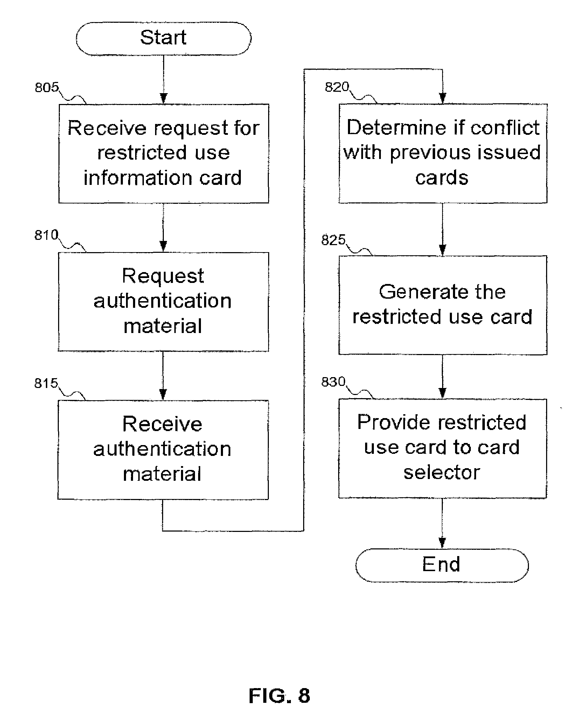

FIG. 8 shows a flowchart of a procedure to issue a restricted use information card according to an embodiment of the invention. Referring to FIG. 8, an identity provider or broker (referred to as a card issuer) receives a request for a restricted use information card at block 805. The request for the restricted use information card can include a restricted use policy associated with a relying party. Alternatively, the card issuer might already have the restricted use policy. At block 810, the card issuer requests authentication materials. The authentication materials are received at block 815. As described above, the authentication materials can be self-asserted by the user or they can be security tokens provided by one or more identity providers. At block 820, the card issuer determines if it has previously issued a restricted use information card to the user requesting the current restricted use information card such that issuance of a new restricted use information card would violate the restricted use policy. In other words, if the user is attempting to use a separate persona to obtain a new restricted use information card for use with the same relying party or under the same restricted use policy, the card issuer can determine that the separate persona belongs to the user and refuse to issue a new restricted use information card. If generating the restricted use information card conflicts with other cards issued to the same user, the card issuer can send a reject message to the card selector. If the card issuer determines that issuing the restricted use information card does not conflict with previously issued cards, the card issuer generates the restricted use information card at block 825. The restricted use information card can include restricted use metadata, such as, a description of the use restrictions and an identifier for one or more relying parties that will allow restricted use access based on the restricted use information card. The card issuer can also store the restricted use policy.

According to some embodiments, the card issuer can generate a unique-id claim associated with the restricted use information card and specific to a relying party. The card issuer can store the unique-id claim for later use in generating security tokens.

At block 820, the card issuer provides the restricted use information card to the card selector that requested the card.

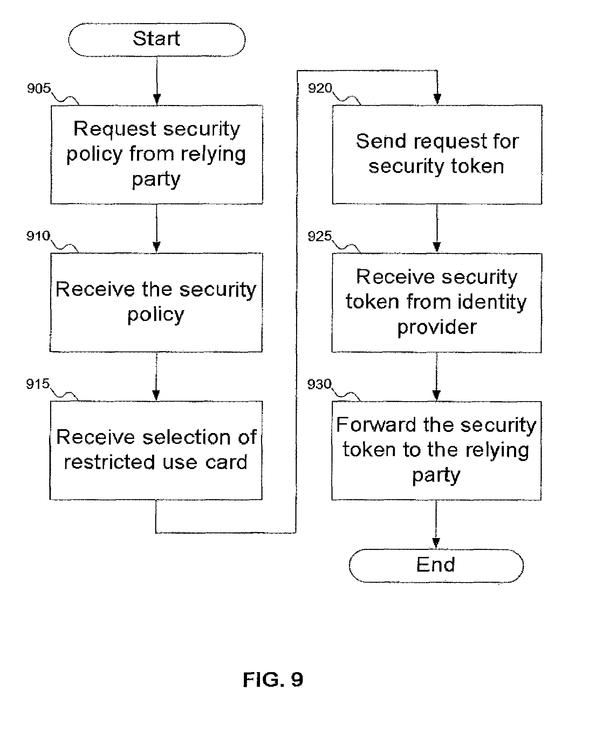

FIG. 9 shows a flowchart of a procedure to use a restricted use information card according to an embodiment of the invention. Referring to FIG. 9, a user desires to gain restricted use access to information at a relying party. So, the user requests a security policy form the relying party at block 905. The security policy is received by a card selector at block 910. The security policy can include metadata specifying the restricted use policies that are supported by the relying party. At block 915, the card selector receives a selection of a restricted use information card from the user. When the card selector receives the security policy, the card selector can determine which information cards are appropriate to satisfy the security policy, using the metadata for example, and present the appropriate information cards to the user for selection. Because the user is requesting restricted use access to the relying party, the card selector can present one or more restricted use information cards to the user for selection. The card selector can provide visual and/or non-visual cues associated with the restricted use information cards to the user to aid the user in making the selection. The card selector can also verify that issuance of a security token associated with the selected restricted use information card does not violate the restricted use policy. For example, the card selector can use a stored restricted use policy and historical information stored at the card selector to determine if the terms of the restricted use policy would be violated by the issuance of another security token. If the terms of the restricted use policy would be violated, the card selector can use a cue to inform the user of such violation. The card selector can also prompt the user to initiate one or more cardflows to remedy the impending violation before requesting the security token from the identity provider.

At block 920, the card selector sends a request for a security token to an identity provider associated with the selected restricted use information card. The card selector receives a security token from the identity provider at block 925. The security token can include a unique-id claim that is specific to both the user and the relying party. The card selector then forwards the security token to the relying party at block 930. The relying party validates the security token and allows the user the requested restricted use access if the restricted use policy is not violated.

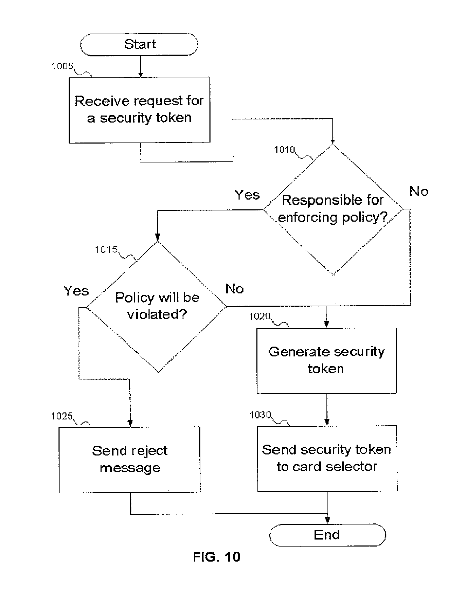

FIG. 10 shows a flowchart of a procedure to issue a security token associated with a restricted use information card according to an embodiment of the invention. Referring to FIG. 10, an identity provider receives a request for a security token from a card selector at block 1005. The request is associated with a restricted use information card issued by the identity provider. At this point, the identity provider can request and receive authentication materials in order to validate the request. The authentication materials can include security tokens issued by one or more additional identity providers. At block 1010, the identity provider determines whether or not it is responsible for enforcing the restriction associated with the restricted use information card. If the identity provider determines that it is responsible for enforcing the restriction, the identity provider determines if issuing a security token would violate the restricted use policy at block 1015. Determining whether or not the restricted use policy would be violated can include retrieving the restricted use policy and historical data from storage and comparing the historical data to the terms of the restricted use policy. If the identity provider determines that the restricted use policy would not be violated, the identity provider generates a security token at block 1020. If the identity provider determines that the restricted use policy would be violated, the identity provider sends a reject message to the card selector at block 1025. If the identity provider determines that it is not responsible for enforcing the restricted use policy, the process proceeds to block 1020 where the security token is generated. Generating the security token can include retrieving a unique-id claim from storage or generating a unique-id claim. At block 1030, the identity provider sends the security token to the card selector. In this example, the identity provider could also be a broker that issued the restricted use information card.

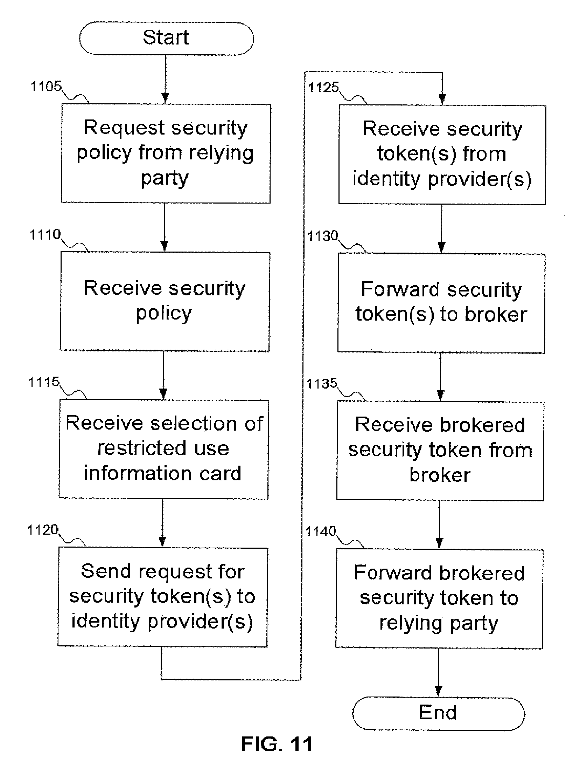

FIG. 11 shows a flowchart of a procedure to obtain restricted use access to a relying party according to an embodiment of the invention. Referring to FIG. 11, a user desires to gain restricted use access to information at a relying party. So, the user requests a security policy form the relying party at block 1105. The security policy is received by a card selector at block 1110. The security policy can include metadata specifying the restricted use policies that are supported by the relying party. According to some embodiments, the relying party only accepts security tokens associated with restricted use accounts from designated brokers. Consequently, the security policy can also include an identifier for a broker or a list of identifiers for brokers from which the relying party is willing to accept brokered security tokens. At block 1115, the card selector receives a selection of a restricted use information card from the user. When the card selector receives the security policy, the card selector can determine which information cards are appropriate to satisfy the security policy, using the metadata in the security policy for example, and present the appropriate information cards to the user for selection. Because the user is requesting restricted use access to the relying party, the card selector can present one or more restricted use information cards to the user for selection. The card selector can provide visual and/or non-visual cues associated with the restricted use information cards to the user to aid the user in making the selection. The card selector can also verify that issuance of a security token associated with the selected restricted use information card does not violate the restricted use policy. For example, the card selector can use a stored restricted use policy and historical information stored at the card selector to determine if the terms of the restricted use policy would be violated by the issuance of another security token. If the terms of the restricted use policy would be violated, the card selector can use a cue to inform the user of such violation. The card selector can also prompt the user to initiate one or more cardflows to remedy the impending violation before requesting the security token from the identity provider.

In the case in which security tokens from one or more identity providers were used as credentials for issuance of the restricted use information card, selection of the restricted use information card can trigger a cardflow which prompts the user to select one or more information cards.

At block 1120, the card selector sends a request for a security token to an identity provider associated with the selected restricted use information card. Alternatively, the card selector can, perhaps using a cardflow, request security tokens from multiple identity providers. In other words, if the user used security tokens from one or more identity providers as credentials to obtain the restricted use information card from the broker, the card selector can receive a selection of one or more information cards issued by the identity providers and request security tokens from the identity providers. According to some embodiments, a cardflow can be triggered by the user's selection of the restricted use information card and the cardflow can identify the appropriate information cards and request security tokens from the appropriate identity providers without further user interaction.

The card selector receives one or more security tokens from the identity provider(s) at block 1125. The security tokens can include uniquely identifying information for the user. The card selector then forwards the security tokens to a broker at block 1130. The card selector receives a brokered security token from the broker at block 1135. The brokered security token can include a unique-id claim associated with the user and/or a restriction-id claim. At block 1140, the card selector forwards the brokered security token to the relying party. The relying party validates the brokered security token and allows the user the requested restricted use access if the restricted use policy is not violated.

A person of ordinary skill in the art will appreciate that the broker could send the brokered security token directly to the relying party rather than sending it to the card selector. In this case, the card selector would not perform blocks 1135 and 1140. Although this approach can strengthen the trust relationship between the relying party and the broker, it can also diminish the trust relationship between the user and the broker.

According to embodiments of the invention, restricted use information cards can be issued by identity providers so that restricted use policies associated with relying parties can be enforced. The restricted use policies can be enforced by the relying party, by the identity provider, or by a broker. The broker can be an identity provider that is specifically selected by the relying party to provide brokered security tokens. Identity providers and brokers can use a unique-id claim that is specific to both a user and a relying party to enable enforcement of the restricted use policy. In this way, the common practice of issuing restricted use access to resources at a relying party can be implemented in information card systems.

Having described and illustrated the principles of the invention with reference to illustrated embodiments, it will be recognized that the illustrated embodiments can be modified in arrangement and detail without departing from such principles, and can be combined in any desired manner. And although the foregoing discussion has focused on particular embodiments, other configurations are contemplated. In particular, even though expressions such as "according to an embodiment of the invention" or the like are used herein, these phrases are meant to generally reference embodiment possibilities, and are not intended to limit the invention to particular embodiment configurations. As used herein, these terms can reference the same or different embodiments that are combinable into other embodiments.

## Claims

1. An apparatus, comprising:
a machine (105,200);
a card selector on the machine configured to receive a selection of a restricted use information card (460) from a user, wherein the restricted use information card includes restricted use metadata, optionally including at least one of a restriction description and an identifier for a relying party (130);
a transmitter (215) on the machine configured to send a request for a security token associated with the restricted use information card to at least one identity provider, the security token optionally including one or more of a unique-id claim (670) and a restriction-id claim; and
a receiver (210) on the machine configured to receive the security token from the at least one identity provider (135).

2. An apparatus according to claim 1, wherein the transmitter is further configured to send the security token to one of a relying party and a broker, and/or
is further configured to send a request for the restricted use information card to the identity provider.

3. An apparatus according to claim 1, wherein the card selector is further configured to store a restricted use policy, and/or
is further configured to associate at least one of a cardflow, a visual cue, and a non-visual cue with the restricted use information card.

4. A method for using a restricted use information card, comprising:
requesting (905) a security policy from a relying party;
receiving (910) the security policy;
receiving (915) a selection of a restricted use information card from a user, the restricted use information card associated with a restricted use policy, and the restricted use information card optionally including restricted use metadata comprising at least one of a restriction description and an identifier for the relying party;
sending (920) a request for a security token associated with the restricted use information card to an identity provider;
receiving (925) the security token from the identity provider; and
optionally sending the security token to a broker (510), and/or
optionally wherein the security token includes a unique-id claim and sending (930) the security token to the relying party.

5. A method according to claim 4, further comprising:
sending a request (805) for the restricted use information card to the identity provider; receiving a request (810) for authentication materials from the identity provider; sending the authentication materials to the identity provider, optionally wherein the authentication materials include one or more security tokens issued by one or more additional identity providers and further comprising obtaining the security tokens before sending the authentication materials; and
receiving the restricted use information card from the identity provider.

6. A method according to claim 5, further comprising:
sending a request for the restricted use information card to the identity provider, optionally comprising sending the restricted use policy to the identity provider;
requesting (1105) the restricted use policy from the relying party;
receiving (1110) the restricted use policy from the relying party, optionally including receiving at least one of a broker identifier and an identity provider identifier;
and comprising the optional step of storing the restricted use policy.

7. A method according to claim 4, further comprising:
receiving (1135) a brokered security token from the broker (510); and
forwarding (1140) the brokered security token (580) to the relying party, wherein the brokered security token optionally comprises one or more of a unique-id claim (670) and a restriction-id claim.

8. A method according to claim 4, further comprising:
querying (470) an endpoint at the relying party; and
receiving (475) endpoint information from the relying party, the endpoint information including at least one of a cardflow, a visual cue, and a non-visual cue to be associated with the restricted use information card.

9. A method according to claim 4, wherein:
receiving a selection of a restricted use information card includes receiving a selection of multiple information cards from the user;
sending a request for a security token includes sending requests for security tokens to multiple identity providers associated with the multiple information cards, optionally comprising initiating a cardflow; and
receiving the security token includes receiving multiple security tokens from the multiple identity providers.

10. A method according to claim 4, wherein receiving a selection of a restricted use information card initiates a cardflow configured to;
identify multiple information cards and send requests for security tokens to multiple identity providers associated with the multiple information cards, and/or
update a visual cue associated with the restricted use information card.

11. A method according to any of claims 4 to 10, wherein issuing a security token, comprises:
receiving (1005) a request at an identity provider for a security token associated with a restricted use information card from a card selector;
determining (1010) if the identity provider is responsible for enforcing a restricted use policy associated with the restricted use information card, optionally including retrieving the restricted use policy from a storage;
determining (1015) if issuance of the security token will violate the restricted use policy if the identity provider is responsible for enforcing the restricted use policy, optionally including comparing the restricted use policy with historical data;
generating (1020) the security token if the identity provider is not responsible for enforcing the restricted use policy or issuance of the security token will not violate the restricted use policy; and
sending (1030) the security token to the card selector.

12. A method according to claim 11, further comprising sending (1025) a reject message to the card selector if the identity provider is responsible for enforcing the restricted use policy and if issuing the security token will violate the restricted use policy.

13. A method according to claim 11, further comprising:
receiving a request for the restricted use information card from a user, optionally including receiving the restricted use policy, and/or storing the restricted use policy;
determining if issuing the restricted use information card would conflict with previous restricted use information cards issued to the user, optionally including comparing the restricted use policy to historical data;
generating the restricted use information card, optionally comprising generating a unique-id claim (670);
sending the restricted use information card to the card selector, wherein the card selector is associated with the user.

14. A method according to claim 11, further comprising:
requesting authentication materials from the user; and
receiving the authentication materials;
optionally including comparing the restricted use policy to historical data, and/or wherein the authentication materials comprise one or more security tokens issued by one or more additional identity providers.

15. A computer program, which when executing on a computer, performs the method of any one of claims 4 to 14.
